# EUROPÄISCHE PATENTSCHRIFT

(11) **EP 0 696 606 B1**
(45) Veröffentlichungstag und Bekanntmachung des Hinweises auf die Patenterteilung: **24.11.1999**
(21) Anmeldenummer: 95111814.0
(22) Anmeldetag: 27.07.1995
(51) Int. Cl.: C08G 18/79, C08G 18/02

(54) **Lackpolyisocyanate mit aliphatisch und aromatisch gebundenen Isocyanatgruppen**
Lacquers polyisocyanates showing aromatic and aliphetic isocyanate groups
Polyisocyanates pour vernis avec des groupements isocyanates aliphatiques et aromatiques

(30) Priorität: 09.08.1994 DE 4428107
(43) Veröffentlichungstag der Anmeldung: 14.02.1996
(73) Patentinhaber: BAYER AG, 51368 Leverkusen (DE)
(72) Erfinder: Brahm, Martin, Dr., D-51766 Engelskirchen (DE); Pedain, Josef, Dr., D-51061 Köln (DE); Schmalstieg, Lutz, Dr., D-50676 Köln (DE)

(56) Entgegenhaltungen:
- EP-A- 0 187 105
- GB-A- 1 234 972

## Beschreibung

Die Erfindung betrifft ein Verfahren zur Herstellung von Lackpolyisocyanaten mit aliphatisch und aromatisch gebundenen Isocyanatgruppen, die nach diesem Verfahren erhältlichen Lackpolyisocyanate, sowie ihre Verwendung in Beschichtungsmaterialien.

Beschichtungsmaterialien auf Basis von Polyisocyanaten sind seit langem bekannt (H. Wagner, H. F. Sarx, Lackkunstharze 5. Auflage, Seite 153 ff, Carl Hanser Verlag München 1971). Die Lackpolyisocyanate, die in derartigen Beschichtungsmaterialien als Vernetzer eingesetzt werden, können sowohl aromatisch als auch aliphatisch gebundene Isocyanatgruppen aufweisen. Ihre Herstellung erfolgt im allgemeinen durch geeignete Modifizierung von aliphatischen und/oder aromatischen Diisocyanaten unter Bildung von Isocyanurat-, Uretdion-, Urethan-, Allophanat- und/oder Biuretgruppen unter Entfernung von überschüssigen, nicht umgesetzten Ausgangsdiisocyanaten im Anschluß an die Modifizierungsreaktion durch Extraktion und insbesondere Destillation (siehe Z.B. GB-A-1 234 972). Auf aliphatischen Diisocyanaten basierende Lackpolyisocyanate weisen eine ausgezeichnete Lichtstabilität auf, während solche auf Basis von aromatischen Diisocyanaten hochreaktiv sind und als hartmachende Vernetzer in schnelltrocknenden Zweikomponenten-Polyurethanlacken Verwendung finden.

Auch die Herstellung von Isocyanuratgruppen aufweisenden Lackpolyisocyanaten durch Mischtrimerisation von Hexamethylendiisocyanat (HDI) mit Diisocyanatotoluol (TDI) ist bekannt (US-PS 3 645 979 bzw. DE-OS 1 954 093). Bei dieser Mischtrimerisation werden nach destillativer Abtrennung der überschüssigen Diisocyanate durch Dünnschichtverdampfung Lackpolyisocyanate erhalten, die die Vorteile aliphatischer und aromatischer Lackpolyisocyanate in sich vereinigen. Die Verfahren des genannten Standes der Technik sind jedoch ebenfalls mit dem Nachteil verbunden, daß im Anschluß an die Trimerisierungsreaktion überschüssiges Ausgangsdiisocyanat destillativ, d.h. unter hoher Temperaturbelastung des Verfahrensprodukts, entfernt werden muß. Ein weiterer Nachteil ist in der festen Konsistenz der resultierenden Mischtrimerisate zu sehen.

Es war daher die der Erfindung zugrunde liegende Aufgabe, ein neues Verfahren zur Herstellung von Isocyanuratgruppen aufweisenden Lackpolyisocyanaten mit aliphatisch und aromatisch gebundenen Isocyanatgruppen zur Verfügung zu stellen, bei welchem die aufwendige Entfernung von überschüssigem Ausgangspolyisocyanat im Anschluß an die Trimerisierungsreaktion nicht erforderlich ist und welches dennoch zu monomerenfreien und außerdem bei Raumtemperatur flüssigen Lackpolyisocyanaten führt, wobei der Begriff "flüssiges Lackpolyisocyanat" auch flüssige Lösungen von an sich festen Lackpolyisocyanaten in Lacklösemitteln mit einem Festkörpergehalt von mindestens 60 Gew.-% umfaßt. Da erfindungsgemäß auch ohne aufwendige Dünnschichtdestillation zur Entfernung von monomerem Ausgangsisocyanat gearbeitet werden kann, kann die Herstellung von derartigen Lösungen von Anfang an unter Verwendung entsprechender Lösungsmittel vorgenommen werden, so daß an keiner Stelle des erfindungsgemäßen Verfahrens Festharze der Art der vorgenannten Produkte des Standes der Technik anfallen.

Diese Aufgabe konnte mit dem nachstehend näher beschriebenen erfindungsgemäßen Verfahren gelöst werden. Diesem Verfahren liegt die überraschende Beobachtung zugrunde, daß sich aromatische Isocyanate, insbesondere TDI, in Anwesenheit hoher Konzentrationen an aliphatischen Isocyanatgruppen selektiv bis auf Restgehalte an aromatischen Diisocyanaten von weniger als 0,5 Gew.-% trimerisieren lassen, so daß als Verfahrensprodukte praktisch monomerenfreie, flüssige Lackpolyisocyanate mit aliphatisch und aromatisch gebundenen Isocyanatgruppen bei einem NCO-Gehalt von 5 bis 25 Gew.-% resultieren.

Gegenstand der Erfindung ist ein Verfahren zur Herstellung von flüssigen Lackpolyisocyanaten mit aliphatisch und aromatisch gebundenen Isocyanatgruppen und einem NCO-Gehalt, bezogen auf Festharz, von 5 bis 25 Gew.-% durch Mischtrimerisation von
A) einer Isocyanatkomponente, bestehend aus mindestens einem organischen Isocyanat mit ausschließlich aromatisch gebundenen Isocyanatgruppen und
B) einer Isocyanatkomponente, bestehend aus mindestens einem Polyisocyanat mit ausschließlich aliphatisch gebundenen Isocyanatgruppen, dadurch gekennzeichnet, daß man ein Gemisch aus
   100 Gew.-Teilen einer Isocyanatkomponente A), bestehend aus A1) 70 bis 100 Gew.-% 2,4- und/oder 2,6-Diisocyanatotoluol und A2) 0 bis 30 Gew.-% anderen, von A1) verschiedenen aromatischen Isocyanaten des Molekulargewichtsbereichs 119 bis 350
   und
   15 bis 700 Gew.-Teilen einer aliphatischen Polyisocyanatkomponente B), bestehend aus mindestens einem Lackpolyisocyanat mit ausschließlich aliphatisch gebundenen Isocyanatgruppen mit einem Gehalt an destillierbaren, monomeren Diisocyanaten von unter 0,7 Gew.-% und einer Viskosität bei 23°C unter 10 000 mPa.s,
   gegebenenfalls unter vorhergehender, gleichzeitiger und/oder anschließender Umsetzung eines Teils der vorliegenden Isocyanatgruppen mit
C) bis zu 40 Äquivalentprozent, bezogen auf die Isocyanatgruppen der Komponente A), einer Alkoholkomponente, bestehend aus mindestens einem Alkohol des Molekulargewichtsbereichs 32 bis 900, sowie gegebenenfalls in Gegenwart von
D) gegenüber Isocyanatgruppen inerten Lösungsmitteln,
einer katalytischen Trimerisierungsreaktion eines -Teils der vorliegenden Isocyanatgruppen unterzieht, bis der Gehalt an destillierbaren, monomeren Isocyanaten A), bezogen auf das Gesamtgemisch, auf unter 0,5 Gew.-% abgesunken ist.

Gegenstand der Erfindung sind auch die nach diesem Verfahren erhältlichen Lackpolyisocyanate.

Gegenstand der Erfindung ist schließlich auch die Verwendung der nach dem erfindungsgemäßen Verfahren erhältlichen Lackpolyisocyanate in Beschichtungsmaterialien, insbesondere als Vernetzer für hydroxyfunktionelle Bindemittel in Zweikomponenten-Polyurethanlacken.

Die Ausgangskomponente A) besteht aus Diisocyanaten Al) oder Gemischen von Diisocyanaten Al) mit bis zu 30 Gew.-%, bezogen auf das Gesamtgewicht der Komponente A), an Isocyanaten A2).

Geeignete Diisocyanate A1) sind 2,4- und/oder 2,6-Diisocyanatotoluol, d.h. insbesondere die technischen Gemische dieser Diisocyanate mit einem Gehalt an 2,6-Diisocyanatotoluol von bis zu 35 Gew.-%, vorzugsweise von bis zu 20 Gew.-%. Besonders bevorzugt besteht die Komponente A1) ausschließlich aus 2,4-Diisocyanatotoluol.

Bei dem gegebenenfalls in der Komponente A) ebenfalls vorliegenden anderen, von A1) verschiedenen Isocyanaten A2) mit aromatisch gebundenen Isocyanatgruppen handelt es sich um solche des Molekulargewichtsbereichs 119 bis 350, wobei sowohl Mono- als auch Polyisocyanate wie beispielsweise Phenylisocyanat, 1,3- und 1,4-Phenylendiisocyanate und/oder 4,4'-Diisocyanatodiphenylmethan bzw. dessen Gemische mit 2,2'- und/oder 2,4'-Diisocyanatodiphenylmethan, sowie gegebenenfalls seinen höheren Homologen in Betracht kommen.

Bei der Komponente B) handelt es sich um beliebige Lackpolyisocyanate, d.h. Polyisocyanate mit aliphatisch gebundenen Isocyanatgruppen, die einen NCO-Gehalt von 10 bis 25 Gew.-%, einen Gehalt an destillierbaren Monomeren von unter 0,7 Gew.-%, vorzugsweise unter 0,5 Gew.-%, aufweisen und lösungsmittelfrei bei 23°C eine Viskosität von unter 10 000, vorzugsweise unter 3 500 und besonders bevorzugt unter 1200 mPa.s, besitzen.

Der Begriff "aliphatisch gebundene Isocyanatgruppen" soll im übrigen auch cycloaliphatisch bzw. araliphatisch gebundene Isocyanatgruppen umfassen.

Bevorzugt werden als Komponente B) Lackpolyisocyanate auf Basis von Hexamethylendiisocyanat (HDI) mit Biuret-, Allophanat-, Isocyanurat-, Uretdion- und/oder Urethanstrukturen eingesetzt. Derartige Polyisocyanate bzw. ihre Herstellung werden beispielsweise in EP-A-0 010 589, EP-A-0 377 177, EP-A-0 496 208, EP-A-0 524 500, EP-A-0 524 501, DE-OS 3 810 908, US-PS 3 903 127 oder US-PS 4 614 785 beschrieben. Der NCO-Gehalt der besonders bevorzugt als erfindungsgemäße Ausgangskomponente B) geeigneten HDI-Derivate liegt bei 17 bis 24 Gew.-%. Neben Lackpolyisocyanaten auf Basis von HDI können analoge Lackpolyisocyanate auf Basis anderer Diisocyanate mit aliphatisch gebundenen Isocyanatgruppen eingesetzt werden. Geeignete derartige andere Diisocyanate sind beispielsweise Dodecamethylendiisocyanat, 2,2,4- und 2,4,4-Trimethyl- 1,6-diisocyanatohexan, 1-Isocyanato-3-isocyanatomethyl-3,5,5-trimethylcyclohexan, 4,4'-Bis-(isocyanatocyclohexyl)-methan, Hexahydro-2,4- und/oder 2,6-diisocyanatotoluol, 1-Isocyanato-4(3)-isocyanatomethyl-1-methylcyclohexan oder p-Xylylendiisocyanat. Auch den gemachten Ausführungen entsprechende Lackpolyisocyanate auf Basis von Gemischen aus HDI und einem oder mehrerer der beispielhaft genannten anderen Diisocyanate sind als Komponente B) geeignet, sofern sie den oben genannten Bedingungen entsprechen.

Bei der Durchführung des erfindungsgemäßen Verfahrens kommen pro 100 Gew.-Teilen der Komponente A) 15 bis 700, vorzugsweise 20 bis 500 und besonders bevorzugt 30 bis 300 Gew.-Teile der Komponente B) zum Einsatz.

Zur Erhöhung der Verträglichkeit der erfindungsgemäßen Verfahrensprodukte mit hydroxyfunktionellen Bindemittelkomponenten wie beispielsweise hydroxyfunktionellen Polyacrylatharzen und/oder zur Elastizitätseinstellung der letztendlich mit den erfindungsgemäßen Verfahrensprodukten hergestellten Beschichtungen kann es sinnvoll sein, vor, während und/oder nach der Trimerisierungsreaktion einen Teil der Isocyanatgruppen mit einer Alkoholkomponente C) umzusetzen.

Als Alkohole C) kommen beliebige Alkohole des Molekulargewichtsbereichs 32 bis 900, vorzugsweise 74 bis 300 in Betracht. Beispielhaft genannt seien einwertige Alkohole wie Methanol, Ethanol, n-Propanol, iso-Propanol, Methoxypropanol, isomere Butanole, Pentanole, Hexanole, n-Heptanol, n-Octanol, n-Nonanol, n-Decanol, n-Dodecanol, n-Octadecanol, gesättigte und ungesättigte Fettalkohole, sowie höherwertige Alkohole wie beispielsweise Ethylenglykol, Diethylenglykol, Triethylenglykol, Dipropylenglykol, Propandiol-1,2 und -1,3, Butandiol-1,4 und -1,3, Hexandiol-1,6, Octandiol-1,8, Nonandiol-1,9, Decandiol-1,10, Dodecandiol-1,12, Octadecandiol-1,18, Neopentylglykol, 1,4-Bishydroxymethylcychexan, 2-Methyl-1,3-propandiol, 2,2,4-Trimethylpentandiol-1,3, 2-Ethyl-1,3-hexandiol, Glycerin, Trimethylolpropan, Trimethylolethan, Dimerfettalkohole, Trimerfettalkohole, die isomeren Hexantriole und Pentaerythrit und/oder Sorbit. Die mittlere OH-Funktionalität der Alkoholkomponente C) liegt im allgemeinen nicht über 2, bevorzugt nicht über 1,2.

Der Anteil an derartigen Alkoholen C) sollte pro NCO-Äquivalent an Komponente A) 0,4 OH-Äquivalente, bevorzugt 0,2 OH-Äquivalente, nicht übersteigen. Besonders bevorzugt wird ohne Zusatz der Alkoholkomponente C) gearbeitet.

Die gegebenenfalls mitzuverwendende Alkoholkomponente C) wird bevorzugt in einer Vorreaktion bei 40 bis 120°C mit den Komponenten A) und B) unter Urethanbildung und gegebenenfalls Allophanatbildung zur Modifizierung der Ausgangsmischung eingesetzt. Es ist jedoch auch möglich, aber weniger bevorzugt, die Alkoholkomponente C) nur mit einer der Komponenten A) oder B) in einer Vorreaktion umzusetzen. Ebenso möglich, jedoch weniger bevorzugt ist die Umsetzung der Alkoholkomponente C) während oder nach der Trimerisationsreaktion.

Das erfindungsgemäße Verfahren wird lösungsmittelfrei oder in Gegenwart geeigneter Lösungsmittel D) durchgeführt, so daß der Festkörpergehalt der erfindungsgemäßen Verfahrensprodukte mindestens 60 Gew.-%, bevorzugt mindestens 70 Gew.-%, beträgt. Besonders bevorzugt wird lösungsmittelfrei gearbeitet, und zwar dann, wenn lösungsmittelfreie Produkte entstehen, die eine Viskosität (23°C) zwischen 200 mPas und 200.000 mPas, bevorzugt 2000 mPas und 50.000 mPas aufweisen.

Geeignete Lösungsmittel D) sind beispielsweise Toluol, Xylol, Cyclohexan, Chlorbenzol, Butylacetat, Ethylacetat, Ethylglykolacetat, Pentylacetat, Hexylacetat, Methoxypropylacetat, Tetrahydrofuran, Dioxan, Aceton, Methylethylketon, Testbenzin, höher substituierte Aromaten, wie beispielsweise unter der Bezeichnung Solvent Naphtha^{R}, Solvesso^{R}, Shellsol^{R}, Isopar^{R}, Nappar^{R} und Diasol^{R} im Handel, Schwerbenzol, Tetralin, Dekalin und Alkane mit mehr als 6 Kohlenstoffatomen sowie Gemische derartiger Lösungsmittel.

Zur Durchführung des erfindungsgemäßen Verfahrens werden die Komponenten A), B) und gegebenenfalls D) gemischt und die Trimerisierungsreaktion durch Zugabe des Trimerisierungskatalysators in Gang gesetzt, wobei gegebenenfalls vorab, gleichzeitig und/oder anschließend eine Modifizierung mit Alkoholen C) im Sinne der oben gemachten Ausführungen erfolgt. Die Trimerisierung erfolgt im Temperaturbereich von 10 bis 120°C, vorzugsweise 20 bis 60°C, bis der Gehalt des Reaktionsgemisches an destillierbaren Isocyanaten A) mit aromatisch gebundenen Isocyanatgruppen unter 0,5 Gew.-% liegt. Bevorzugt wird so lange trimerisiert, bis sich ein Gehalt an destillierbarer Isocyanatkomponente A) von unter 0,1 Gew.-% eingestellt hat.

Bei der Durchführung des erfindungsgemäßen Verfahrens werden an sich bekannte Trimerisierungskatalysatoren für die Trimerisierung aromatischer Isocyanate eingesetzt. Die Katalysatoren kommen im allgemeinen in Mengen von 0,001 bis 3, vorzugsweise 0,01 bis 1 Gew.-%, bezogen auf das Gewicht der Komponente A), zum Einsatz. Geeignete Trimerisierungskatalysatoren sind beispielsweise Mannich-Basen, quartäre Ammoniumsalze, Alkalisalze von Carbonsäuren, tert. Amine bzw. deren Gemische.

Falls keine Trimerisierungskatalysatoren eingesetzt werden, die sich während der Trimerisierungsreaktion von selbst zersetzen und daher nicht abgestoppt werden müssen, wird die Reaktion im allgemeinen durch Zugabe eines geeigneten Katalysatorengifts und gegebenenfalls kurzfristige Temperaturerhöhung auf bis zu 120°C abgebrochen, sobald der gewünschte Trimerisierungsgrad bzw. der angestrebte niedere Monomerengehalt erreicht ist. Geeignete Katalysatorengifte für die bevorzugt eingesetzten basischen Trimerisierungskatalysatoren sind insbesondere Säuren wie beispielsweise Phosphorsäure, Schwefelsäure, Salzsäure oder Acylierungsmittel bzw. oder Alkylierungsmittel wie beispielsweise Carbonsäurechloride, Dimethylsulfat oder p-Toluolsulfonsäurealkylester.

Bei den so erhaltenen erfindungsgemäßen Verfahrensprodukten handelt es sich um Polyisocyanatgemische mit (jeweils bezogen auf lösungsmittelfreies Festharz) einem Gehalt an NCO-Gruppen von 5 bis 25, vorzugsweise 10 bis 21 Gew.-% und einem Gehalt an destillierbarem Ausgangspolyisocyanat A) von maximal 0,5, vorzugsweise maximal 0,1 Gew.-%.

Die erfindungsgemäßen Verfahrensprodukte stellen unter dem Einfluß von Luftfeuchtigkeit aushärtbare Bindemittel (Einkomponenten-Lacke) dar. Besonders bevorzugt werden sie jedoch als Vernetzer in Zweikomponenten-Polyurethanlacken eingesetzt. Sie eignen sich insbesondere als Härter für hydroxyfunktionelle Bindemittel, wie z.B. Polyether, Polyester, Polyesteramide, Polycarbonate, Polyacrylate oder Polybutadiene der aus der Lacktechnologie an sich bekannten Art.

Die erfindungsgemäßen Verfahrensprodukte können selbstverständlich auch in mit an sich bekannten Blockierungsmitteln für Isocyanatgruppen blockierter Form als hitzeaktivierbare Vernetzer Verwendung finden.

Beschichtungsmittel, die erfindungsgemäße Verfahrensprodukte als Vernetzer enthalten, können selbstverständlich auch die sonstigen an sich bekannten Hilfs- und Zusatzmitel der Lacktechnologie wie beispielsweise die üblichen Benetzungsmittel, Verlaufsmittel, Hautverhinderungsmittel, Antischaummittel, Lösungsmittel, Mattierungsmittel wie beispielsweise Kieselsäure, Aluminiumsilikate und hochsiedende Wachse, viskositätsregulierende Stoffe, Pigmente, Farbstoffe, UV-Absorber, Stabilisatoren gegen thermischen bzw. oxidativen Abbau u. dgl. enthalten.

Erfindungsgemäße Verfahrensprodukte als Vernetzer enthaltende Beschichtungsmaterialien können zur Beschichtung beliebiger Substrate wie beispielsweise Holz, Kunststoffe, Leder, Papier, Textilien, Glas, Keramik, Putz, Mauerwerk, Metalle oder Beton verwendet werden. Sie lassen sich mit üblichen Applikationsmethoden wie Spritzen, Streichen, Fluten, Gießen, Tauchen, Walzen aufbringen. Die Beschichtungsmittel können in Form von Klarlacken als auch in Form pigmentierter Lacke verwendet werden.

Beschichtungsmaterialien, die neben hydroxyfunktionellen Bindemittelkomponenten der beispielhaft genannten Art erfindungsgemäße Verfahrensprodukte als Vernetzer in solchen Mengen enthalten, die dem bevorzugten NCO/OH-Äquivalentverhältnis von 0,5:1 bis 2:1 entsprechen, härten bei 20°C im allgemeinen während eines Zeitraums von wenigen Minuten bis Stunden zu hochwertigen Überzügen aus. Gewünschtenfalls kann die Aushärtung der Beschichtungen auch bei Verwendung von erfindungsgemäßen Verfahrensprodukten mit freien Isocyanatgruppen durch Temperaturerhöhung auf bis zu 200°C beschleunigt werden.

In den nachfolgenden Beispielen beziehen sich alle Angaben in "Teilen" und "Prozent" auf das Gewicht.

### Beispiele

In den nachfolgenden Beispielen wird als Trimerisierungskatalysator eine 40 %ige Lösung in n-Butylacetat einer Mannich-Base auf Basis von Phenol und Dimethylamin eingesetzt. Die Herstellung des nachstehend verwendeten Trimerisierungskatalysators ist in Houben-Weyl, Methoden der organischen Chemie, Band E 20 Makromolekulare Stoffe, Seite 1746 (Georg Thieme Verlag Stuttgart, New York 1987) beschrieben.

### Beispiel 1

In einer Rührapparatur werden 533 g (2,7 val) eines Uretdion-Diisocyanats auf Basis von HDI mit einem NCO-Gehalt von 21,8 %, einem Gehalt an freiem HDI von 0,25 % und einer Viskosität (23°C) von 170 mPa.s mit 117 g (1,35 val) 2,4Diisocyanatotoluol (TDI) und 1,34 g der obengenannten Katalysatorlösung vermischt. Nach 8stündigem Rühren bei Raumtemperatur wird mit der gleichen Menge an Katalysatorlösung nachkatalysiert und weitere 40 Stunden bei Raumtemperatur gerührt, bis der NCO-Gehalt auf 19,1 % abgesunken ist. Zur Beendigung der Trimerisationsreaktion wird das entstandene Produkt mit 2,1 g p-Toluolsulfonsäuremethylester versetzt und für eine Stunde auf 80°C erhitzt. Das Produkt hat folgende Kenndaten:

| | |
|---|---|
| NCO-Gehalt | 19,25 % |
| Festkörpergehalt | 100 % |
| Viskosität bei 23°C | 4400 mPa.s |
| TDI-Gehalt | 0,09 % |

### Beispiel 2

In einer Rührapparatur werden 410 g (2,1 val) des in Beispiel 1 genannten Uretdion-Diisocyanats und 183 g (2,1 val) 2,4-Diisocyanatotoluol auf 50°C aufgeheizt und tropfenweise mit 59 g (0,32 val) 1-Dodecanol versetzt. Man rührt bis der NCO-Gehalt auf 25 % abgesunken ist. Im Anschluß wird bei Raumtemperatur mit 1,6 g der obengenannten Katalysatorlösung aktiviert und 24 Stunden trimerisiert bis sich ein NCO-Gehalt von 17,5 % eingestellt hat. Zur Beendigung der Trimerisationsreaktion wird das entstandene Polyisocyanat mit 1,3 g p-Toluolsulfonsäuremethylester versetzt und für eine Stunde auf 80°C aufgeheizt. Das Produkt hat folgende Kenndaten:

| | |
|---|---|
| NCO-Gehalt | 17,5 % |
| Festkörpergehalt | 100 % |
| Viskosität bei 23°C | 7000 mPa.s |
| TDI-Gehalt | 0,35 % |

### Beispiel 3

In einer Rührapparatur werden 566 g (2,6 val) eines lösungsmittelfreien Allophanat/Trimerisats auf Basis Hexamethylendiisocyanat und n-Butanol mit einem NCO-Gehalt von 19,3 %, einem Gehalt an freiem HDI von 0,3 % und einer Viskosität (23°C) von 300 mPa.s (hergestellt gemäß EP-A-0 496 208) und 226 g (2,6 val) 2,4-Diisocyanatotoluol auf 40°C aufgeheizt und tropfenweise mit 73 g (0,39 val) 1-Dodecanol versetzt. Nach ca. einer Stunde ist ein NCO-Gehalt von 23,3 % erreicht. Nachfolgend wird mit 1 g der obengenannten Katalysatorlösung versetzt und 19 Stunden bei 40°C trimerisiert bis der NCO-Gehalt auf 15,2 % abgesunken ist. Zur Beendigung der Trimerisationsreaktion werden 0,6 g p-Toluolsulfonsäuremethylester zugegeben und für eine Stunde auf 80°C erhitzt. Das Produkt hat folgende Kenndaten:

| | |
|---|---|
| NCO-Gehalt | 15,2 % |
| Festkörpergehalt | 100 % |
| Viskosität bei 23°C | 13000 mPa.s |
| TDI-Gehalt | 0,09 % |

### Beispiel 4

In einer Rührapparatur werden 186 g (0,32 val) eines niedrigviskosen Trimerisates auf Basis HDI (NCO-Gehalt 22,4 %, Gehalt an freiem HDI 0,1 %, Viskosität (23°C): 1000 mPa.s) und 174 g (4 val) 2,4-Diisocyanatotoluol mit 80 g Butylacetat gemischt und auf 40°C aufgeheizt. Anschließend wird mit 0,75 g der obengenanntnen Katalysatorlösung aktiviert. Nach 4 Stunden wird nochmals mit 0,5 g der Katalysatorlösung nachaktiviert. Innerhalb von 24 Stunden ist der gewünschte NCO-Gehalt von 16,1 % erreicht und es wird durch Zugabe von 1 g Benzoylchlorid abgestoppt. Die Reaktionsmischung wird nachfolgend für eine Stunde auf 80°C erwärmt. Das Produkt hat folgende Kenndaten:

| | |
|---|---|
| Konzentration | 81,7 % |
| NCO-Gehalt | 16,1 % |
| TDI-Gehalt | 0,41 % |
| Viskosität bei 23°C | 22 000 mPa.s |

### Beispiel 5 (Klarlackherstellung)

Das in Beispiel 4 hergestellte Polyisocyanat wurde unter Einhaltung eines NCO/OH-Verhältnisses von 1 mit einem handelsüblichen Polyesterpolyol (Desmophen 1300 Handelsprodukt der Bayer AG, Leverkusen, OH-Gehalt: 3,2 %, 75 %ig in Butylacetat) gemischt, mit Butylacetat auf eine Auslaufzeit von 20 Sekunden im DIN 4-Becher eingestellt und in einer Schichtstärke von 180 µm auf eine gereinigte Glasplatte aufgerakelt. Es resultiert ein klarer, hochglänzender Lackfilm mit folgenden Eigenschaften:

| | |
|---|---|
| Trocknungszeit | 7 Stunden |
| Pendelhärte nach König nach 1 Tag | 62 s |
| Pendelhärte nach König nach 8 Tagen | 130 s |
| Löungsmittelbeständigkeit nach 8 Tagen | sehr gut |

## Patentansprüche

1. Verfahren zur Herstellung von flüssigen Lackpolyisocyanaten mit aliphatisch und aromatisch gebundenen Isocyanatgruppen und einem NCO-Gehalt, bezogen auf Festharz, von 5 bis 25 Gew.-% durch Mischtrimerisation von
A) einer Isocyanatkomponente, bestehend aus mindestens einem organischen Isocyanat mit ausschließlich aromatisch gebundenen Isocyanatgruppen und
B) einer Isocyanatkomponente, bestehend aus mindestens einem Polyisocyanat mit ausschließlich aliphatisch gebundenen Isocyanatgruppen, dadurch gekennzeichnet, daß man ein Gemisch aus
100 Gew.-Teilen einer Isocyanatkomponente A), bestehend aus A1) 70 bis 100 Gew.-% 2,4- und/oder 2,6-Diisocyanatotoluol und A2) 0 bis 30 Gew.-% anderen, von Al) verschiedenen aromatischen Isocyanaten des Molekulargewichtsbereichs 119 bis 350
und
15 bis 700 Gew.-Teilen einer aliphatischen Polyisocyanatkomponente B), bestehend aus mindestens einem Lackpolyisocyanat mit ausschließlich aliphatisch gebundenen Isocyanatgruppen mit einem Gehalt an destillierbaren, monomeren Diisocyanaten von unter 0,7 Gew.-% und einer Viskosität bei 23°C unter 10 000 mPas,
gegebenenfalls unter vorhergehender, gleichzeitiger und/oder anschließender Umsetzung eines Teils der vorliegenden Isocyanatgruppen mit
C) bis zu 40 Äquivalentprozent, bezogen auf die Isocyanatgruppen der Komponente A), einer Alkoholkomponente, bestehend aus mindestens einem Alkohol des Molekulargewichtsbereichs 32 bis 900, sowie gegebenenfalls in Gegenwart von
D) gegenüber Isocyanatgruppen inerten Lösungsmitteln,
einer katalytischen Trimerisierungsreaktion eines Teils der vorliegenden Isocyanatgruppen unterzieht, bis der Gehalt an destillierbaren, monomeren Isocyanaten A), bezogen auf das Gesamtgemisch, auf unter 0,5 Gew.-% abgesunken ist.

2. Verfahren gemäß Anspruch 1, dadurch gekennzeichnet, daß die Komponente A) ausschließlich aus 2,4-Diisocyanatotoluol besteht.

3. Verfahren gemäß Anspruch 1 und 2, dadurch gekennzeichnet, daß die Komponente B) in einer Menge von 30 bis 300 Gew.-Teilen eingesetzt wird.

4. Verfahren gemäß Anspruch 1 bis 3, dadurch gekennzeichnet, daß die Umsetzung lösungsmittelfrei durchgeführt wird.

5. Gemäß Anspruch 1 bis 4 erhältliche Lackpolyisocyanate.

6. Verwendung der gemäß Anspruch 1 bis 4 erhältlichen Lackpolyisocyanate als Bindemittel oder als Bindemittelkomponente in Beschichtungsmitteln.

7. Verwendung gemäß Anspruch 6 als Vernetzer für hydroxyfunktionelle Bindemittel in Zweikomponenten-Polyurethanlacken.

## Claims

1. Process for the preparation of liquid paint polyisocyanates with aliphatically and aromatically bonded isocyanate groups and an NCO content, based on the solid resin, of 5 to 25 wt.% by mixed trimerization of
A) an isocyanate component comprising at least one organic isocyanate with exclusively aromatically bonded isocyanate groups and
B) an isocyanate component comprising at least one polyisocyanate with exclusively aliphatically bonded isocyanate groups, characterized in that a mixture of
100 parts by wt. of an isocyanate component A) comprising A1) 70 to 100 wt.% 2,4- and/or 2,6-diisocyanatotoluene and A2) 0 to 30 wt.% of other aromatic isocyanates of the molecular weight range 119 to 350 which differ from A1)
and
15 to 700 parts by wt. of an aliphatic polyisocyanate component B) comprising at least one paint polyisocyanate with exclusively aliphatically bonded isocyanate groups with a content of distillable, monomeric diisocyanates of less than 0.7 wt.% and a viscosity at 23°C of less than 10,000 mPas,
optionally with prior, simultaneous and/or subsequent reaction of some of the isocyanate groups present with
C) up to 40 equivalent per cent, based on the isocyanate groups of component A), of an alcohol component comprising at least one alcohol of the molecular weight range 32 to 900, and optionally in the presence of
D) solvents which are inert towards isocyanate groups,
is subjected to a catalytic trimerization reaction of some of the isocyanate groups present, until the content of distillable, monomeric isocyanates A), based on the total mixture, has fallen to below 0.5 wt.%.

2. Process according to claim 1, characterized in that component A) comprises exclusively 2,4-diisocyanatotoluene.

3. Process according to claim 1 and 2, characterized in that component B) is employed in an amount of 30 to 300 parts by wt.

4. Process according to claim 1 to 3, characterized in that the reaction is carried out without a solvent.

5. Paint polyisocyanates obtainable according to claim 1 to 4.

6. Use of the paint polyisocyanates obtainable according to claim 1 to 4 as binders or as binder components in coating compositions.

7. Use according to claim 6 as a crosslinking agent for hydroxy-functional binders in two-component polyurethane paints.

## Revendications

1. Procédé pour la préparation de polyisocyanates pour vernis liquides à groupes isocyanate à liaisons aliphatiques et aromatiques et à une teneur en NCO de 5 à 25 % du poids de la résine solide, par trimérisation en mélange de
A) un composant isocyanate consistant en au moins un isocyanate organique à groupes isocyanate à liaisons exclusivement aromatiques
et
B) un composant isocyanate consistant en au moins un polyisocyanate à groupes isocyanate à liaisons exclusivement aliphatiques,
caractérisé en ce que l'on soumet un mélange de
100 parties en poids d'un composant isocyanate A) consistant en A1) 70 à 100 % en poids de 2,4- et/ou de 2,6-diisocyanatotoluène et A2) 0 à 30 % en poids d'isocyanates aromatiques autres que A1), de poids moléculaire 119 à 350 et
15 à 700 parties en poids d'un composant polyisocyanate aliphatique B) consistant en au moins un polyisocyanate pour vernis à groupes isocyanate à liaisons exclusivement aliphatiques, à une teneur en diisocyanates monomères distillables inférieure à 0,7 % en poids et à une viscosité inférieure à 10000 mPa.s à 23°C, le cas échéant avec réaction préalable, simultanée et/ou subséquente d'une partie des groupes isocyanate présents avec
C) jusqu'à 40 équivalents pour-cent, par rapport aux groupes isocyanate du composant A), d'un composant alcool consistant en au moins un alcool de poids moléculaire 32 à 900, et le cas échéant en présence de
D) des solvants inertes à l'égard des groupes isocyanate,
à une réaction de trimérisation catalytique d'une partie des groupes isocyanate présents, jusqu'à ce que la teneur en isocyanates monomères distillables A) soit tombée au-dessous de 0,5 % du poids du mélange total.

2. Procédé selon la revendication 1, caractérisé en ce que le composant A) consiste exclusivement en le 2,4-diisocyanatotoluène.

3. Procédé selon les revendications 1 et 2, caractérisé en ce que le composant B) est mis en oeuvre en quantité de 30 à 300 parties en poids.

4. Procédé selon les revendications 1 à 3, caractérisé en ce que la réaction est réalisée en l'absence de solvant.

5. Polyisocyanates pour vernis obtenus selon les revendications 1 à 4.

6. Utilisation des polyisocyanates pour vernis obtenus selon les revendications 1 à 4 en tant que liants ou composants de liants dans des produits de revêtement.

7. Utilisation selon la revendication 6, en tant qu'agents réticulants pour des liants à fonctions hydroxy dans des vernis de polyuréthanne à deux composants.
